# FASCICULE DE BREVET EUROPEEN

(11) **EP 2 822 431 B1**
(45) Date de publication et mention de la délivrance du brevet: **20.04.2016**
(21) Numéro de dépôt: 13712309.7
(22) Date de dépôt: 04.03.2013
(51) Int. Cl.: A47J 36/02, A47J 27/00, C25D 11/22, A47J 37/10, B65D 25/02, B65D 25/34, C25D 11/16, C25D 11/24

(54) **PROCEDE D'OBTENTION D'UN RECIPIENT DE CUISSON COMPORTANT UNE FACE EXTERIEURE ANODISEE DURE COLOREE**
VERFAHREN ZUR HERSTELLUNG EINES KOCHGEFÄSSES MIT FARBIGER, HARTANODISIERTER AUSSENFLÄCHE
METHOD FOR OBTAINING A COOKING VESSEL HAVING A COLOURED HARD-ANODIZED OUTER FACE

(30) Priorité: 07.03.2012 FR 1252086
(43) Date de publication de la demande: 14.01.2015
(73) Titulaire: SEB S.A., 69130 Ecully (FR)
(72) Inventeur: RUBIO, Martin, F-74150 Rumilly (FR); TUFFE, Stéphane, F-73160 Cognin (FR)
(74) Mandataire: Cémeli, Eric Philippe Laurent
(86) Numéro de dépôt international: PCT/FR2013/050460
(87) Numéro de publication internationale: WO 2013/132185

(56) Documents cités:
- EP-A1- 0 424 072
- WO-A1-2008/061555
- DE-A1- 4 439 004

## Description

La présente invention concerne le domaine technique des appareils et ustensiles de cuisson comportant un récipient de cuisson.

La présente invention concerne plus particulièrement, mais non exclusivement, les articles culinaires tels que les casseroles, les poêles ou les woks, ainsi que les appareils électriques de cuisson comportant une cuve destinée à contenir les aliments.

Il est connu du document GB 1 099 486 de réaliser des récipients de cuisson en aluminium présentant une couche superficielle d'anodisation dure. Cette couche superficielle peut si désiré être pigmentée. La surface ainsi obtenue est plus facile à nettoyer qu'une surface non anodisée. Toutefois la surface ainsi obtenue est moins facile à nettoyer qu'une surface revêtue d'une couche anti-adhésive.

Le document EP 0 424 072 et le document EP 0 902 105 proposent de réaliser des récipients de cuisson comportant un revêtement antiadhérent tel que du PTFE sur un support en aluminium présentant une anodisation dure. L'anodisation dure est donc réalisée préalablement au revêtement PTFE. Cette disposition permet d'améliorer la résistance à l'usure et aux rayures du revêtement PTFE. Usuellement, le revêtement PTFE est utilisé principalement pour revêtir la face intérieure des récipients de cuisson, du fait de la résistance mécanique limitée de ce type de revêtement.

Il est connu du document EP 1 894 502 de réaliser un revêtement sol-gel sur au moins une face d'un article culinaire comportant un support en aluminium ou en alliage d'aluminium, ce support pouvant être en aluminium anodisé. Ce document envisage une épaisseur de couche d'anodisation comprise entre 5 et 100µm. L'autre face peut si désiré être revêtue de PTFE. Le revêtement sol-gel permet d'améliorer la tenue au lave-vaisselle du récipient de cuisson, ainsi que la tenue à la flamme du récipient de cuisson.

Il est connu de la demande FR 10 59522 de réaliser un récipient de cuisson comportant une face extérieure anodisée dure et colorée, pour lequel un revêtement sol gel est réalisé sur la face extérieure anodisée dure. Une telle réalisation permet d'obtenir des récipients de cuisson pour lesquels les colorations de la face extérieure présentent un caractère durable, sont susceptibles de résister aux agents lessiviels utilisés dans les lave-vaisselle et résistent à la flamme. Un inconvénient de la réalisation proposée réside dans la complexité du procédé d'obtention mis en oeuvre, qui nécessite de nombreuses étapes.

Un procéde d'obtention d'un récipient de cuisson selon le préambule de la revendication 1 et un récipient de cuisson selon le préambule de la revendication 9 sont connus du document WO2008/061555.

Un but de la présente invention est de proposer des colorations de la surface extérieure anodisée d'un récipient de cuisson, qui présentent un caractère durable, sans nécessiter de revêtement de protection.

Un autre but de la présente invention est de proposer des colorations de la surface extérieure anodisée d'un récipient de cuisson, qui soient susceptibles de résister à la flamme utilisée pour réaliser les cuissons, ou à toute autre source de chaleur utilisée pour réaliser les cuissons, sans nécessiter de revêtement de protection.

Un but additionnel de la présente invention est de proposer des colorations de la surface extérieure anodisée d'un récipient de cuisson, qui soient compatibles avec un revêtement PTFE de la surface intérieure dudit récipient de cuisson, sans nécessiter de revêtement de protection.

Ces buts sont atteints avec un procédé d'obtention d'un récipient de cuisson comportant les étapes suivantes :
- réalisation d'une cuve présentant une face extérieure en aluminium et une face intérieure,
- réalisation d'une anodisation d'au moins la face extérieure de la cuve,
- au moins une étape de coloration étant réalisée sur la face extérieure anodisée après l'anodisation,
du fait que l'anodisation est une anodisation dure pour obtenir une couche anodisée dure et que ladite étape de coloration met en oeuvre au moins un colorant organique anthraquinonique hydrosoluble, ladite étape de coloration utilisant un bain de coloration contenant des composés organiques anthraquinoniques qui vont précipiter et être piégés à l'intérieur des pores de la couche anodisée dure, pour obtenir des colorations de la surface anodisée. De manière surprenante, des essais ont montré que des colorations de surface extérieures anodisées de récipient de cuisson ainsi réalisées présentent un caractère durable, même lorsque le récipient de cuisson est exposé à la flamme, sans nécessiter de revêtement de protection tel qu'un revêtement de type sol-gel, vernis, laque, PTFE.

Selon une forme de réalisation avantageuse, l'étape de coloration utilise une immersion dans une solution aqueuse de composé(s) organique(s) anthraquinonique(s) hydrosoluble(s). L'utilisation de solvants organiques peut ainsi être évitée.

Selon une forme de réalisation préférée, ledit procédé comporte une étape de réalisation d'un revêtement PTFE sur la face intérieure de la cuve. Si désiré l'étape de réalisation d'un revêtement PTFE peut comporter une préparation de surface ainsi que le dépôt d'une ou plusieurs couches intermédiaires. Le revêtement PTFE peut notamment être réalisé par enduction.

Alors, selon un mode de réalisation, le procédé comporte une étape de réalisation d'un revêtement PTFE sur la face intérieure de la cuve et l'étape de réalisation d'une anodisation dure de la face extérieure de la cuve intervient après l'étape de réalisation d'un revêtement PTFE sur la face intérieure de la cuve. L'anodisation effectuée après le revêtement PTFE présente l'avantage de n'anodiser que la face extérieure de la cuve, ce qui permet de réduire le temps de traitement, de diminuer la consommation de courant et d'acide par rapport à l'anodisation de la face extérieure et de la face intérieure de la cuve. De plus le PTFE supporte bien le bain d'acide sulfurique usuellement utilisé pour réaliser l'anodisation.

Si désiré, le procédé comporte une étape de réalisation d'une anodisation dure préliminaire de la face extérieure et de la face intérieure de la cuve avant l'étape de réalisation d'un revêtement PTFE sur la face intérieure de la cuve, l'étape de réalisation d'une anodisation dure de la face extérieure de la cuve intervenant après une étape de décapage de la face extérieure de la cuve postérieure à l'étape de réalisation d'un revêtement PTFE sur la face intérieure de la cuve. Ce traitement d'anodisation dure préliminaire concerne la face intérieure et la face extérieure de la cuve et permet d'obtenir une base dure avant la réalisation de revêtement PTFE.

En l'absence de revêtement PTFE, avantageusement l'étape d'anodisation dure et l'étape de coloration sont réalisées sur la face intérieure et la face extérieure de la cuve.

Selon une caractéristique avantageuse de l'invention, l'anodisation dure est réalisée à une température supérieure ou égale à 0°C. Pour des températures d'anodisation inférieures, les pores formés lors de l'anodisation sont en effet très denses et très petits et la coloration de la surface anodisée dure ne se fait pas.

Selon une autre caractéristique avantageuse de l'invention, l'anodisation dure est réalisée à une température inférieure ou égale à 17°C. Pour des températures d'anodisation supérieures, les pores formés lors de l'anodisation sont trop gros et l'anodisation n'est pas suffisamment dure, même si la coloration se fait bien.

Selon une caractéristique préférée de l'invention, l'anodisation dure est réalisée à une température comprise entre 5°C et 12°C. Pour cette gamme de températures, les pores formés lors de l'anodisation sont suffisamment petits pour que la surface anodisée soit suffisamment dure, et suffisamment gros pour que les colorants anthraquinoniques puissent pénétrer dans les pores et colorer la surface anodisée dure.

Ces buts sont atteints aussi avec un récipient de cuisson obtenu selon un procédé conforme à l'une au moins des caractéristiques précitées.

Ces buts sont atteints aussi avec un récipient de cuisson comportant une cuve présentant une face extérieure en aluminium ainsi qu'une face intérieure, au moins la face extérieure étant anodisée, du fait que la face extérieure est anodisée dure pour obtenir une couche anodisée dure, et que la face extérieure anodisée dure est colorée avec au moins un colorant organique anthraquinonique hydrosoluble, des composés organiques anthraquinoniques étant piégés à l'intérieur des pores de la couche anodisée dure, pour obtenir des colorations de la surface extérieure anodisée.

Selon un mode de réalisation avantageux, la cuve est obtenue par emboutissage d'un substrat présentant au moins une face en aluminium, ladite face formant alors la face extérieure de la cuve.

Alors, selon une forme de réalisation, le substrat présente deux faces en aluminium. Le substrat peut notamment être en aluminium massif, ou en colaminé présentant deux faces en aluminium et une âme en acier. Si désiré l'acier peut être choisi parmi les aciers inoxydables.

Alors, selon une autre forme de réalisation, le substrat est formé par un colaminé présentant une face en aluminium et une face en acier inoxydable, cette face en acier inoxydable étant avantageusement destinée à être revêtue de PTFE.

Selon un autre mode de réalisation avantageux, la cuve est réalisée en fonte d'aluminium.

Selon une forme de réalisation avantageuse, la face extérieure de la cuve présente une surface brossée ou microbillée. Le traitement d'anodisation est un traitement de surface, dans lequel la matière de la surface est modifiée, et non un revêtement de surface, dans lequel une ou plusieurs couches sont ajoutées sur une surface existante. Le traitement d'anodisation dure n'est pas limité aux états de surfaces lisses ou polis, une anodisation peut notamment être envisagée sur une surface brossée ou microbillée.

Avantageusement, pour obtenir un récipient de cuisson compatible induction, la cuve comporte au moins un insert réalisé en matériau ferromagnétique.

Ces buts sont atteints aussi avec un article culinaire comportant un récipient de cuisson et un organe de préhension fixé sur ledit récipient de cuisson par au moins un rivet ou par soudage, ledit récipient de cuisson étant conforme à l'une au moins des caractéristiques précitées.

Ces buts sont atteints aussi avec un appareil électrique de cuisson, comportant un récipient de cuisson associé à des moyens de chauffe, ledit récipient de cuisson étant conforme à l'une au moins des caractéristiques précitées.

L'invention sera mieux comprise à l'étude d'exemples de réalisation, pris à titre nullement limitatif, illustrés dans les figures annexées, dans lesquelles :
- la figure 1 illustre un récipient de cuisson 1 selon l'invention,
- la figure 2 illustre un article culinaire 100 comportant un récipient de cuisson 1 selon l'invention,
- la figure 3 illustre de manière schématique un appareil électrique de cuisson 200 comportant un récipient de cuisson 1 selon l'invention.

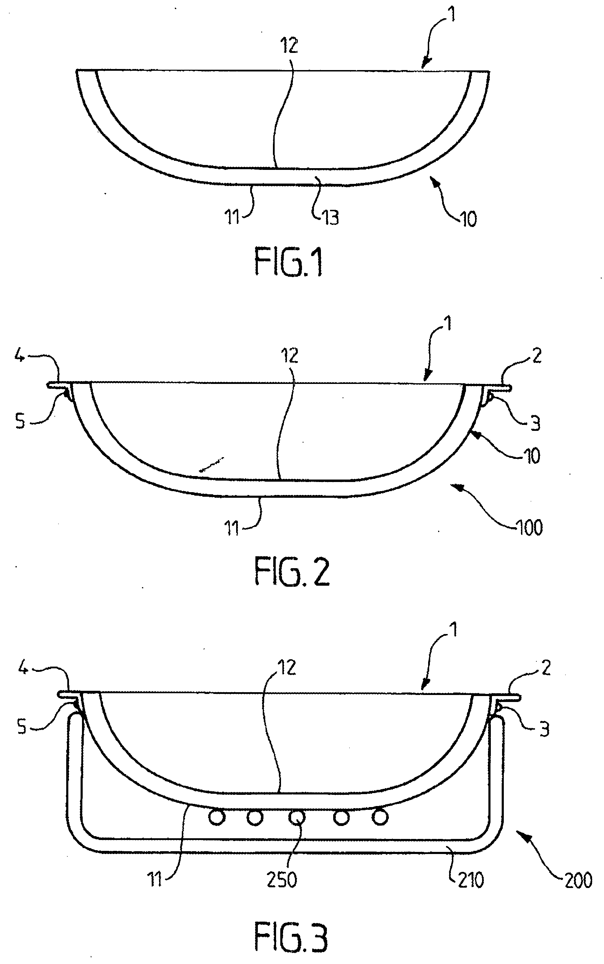

Le récipient de cuisson 1 illustré sur les figures 1 et 2 comporte une cuve 10 présentant une face extérieure 11 en aluminium ainsi qu'une face intérieure 12.

Selon un mode de réalisation, la cuve 10 est obtenue par emboutissage d'un substrat 13 présentant au moins une face en aluminium destinée à former la face extérieure 11 de la cuve 10.

Selon une forme de réalisation, le substrat 13 présente deux faces en aluminium destinées à former respectivement la face extérieure 11 et la face intérieure 12 de la cuve 10.

Si désiré, le substrat 13 peut être en aluminium massif. Un alliage d'aluminium 3003 peut notamment être utilisé à cet effet. Le substrat 13 utilisé pour former la cuve 10 est alors découpé dans une tôle d'aluminium.

Selon une autre forme de réalisation, le substrat 13 est formé par un colaminé présentant une face en aluminium et une face en acier inoxydable, la face en aluminium étant destinée à former la face extérieure 11 de la cuve, la face en acier inoxydable étant destinée à former la face intérieure 12 de la cuve 10.

Selon autre un mode de réalisation, la cuve 10 est réalisée en fonte d'aluminium, par exemple avec un alliage d'aluminium AlSi12.

Si désiré, la face extérieure 11 de la cuve 10 n'est pas nécessairement lisse ou polie, mais peut notamment présenter une surface brossée ou microbillée.

Si désiré la cuve 10 peut comporter au moins un insert réalisé en matériau ferromagnétique, tel que par exemple un acier ferritique, pour réaliser un récipient de cuisson 1 susceptible d'être chauffé par induction. De préférence le matériau ferromagnétique est un acier inoxydable ferritique. Si désiré l'insert réalisé en matériau ferromagnétique peut être formé par une plaque comportant une ou plusieurs perforations. L'insert est avantageusement assemblé par frappe à chaud ou à froid avec l'aluminium du substrat 13 ou est recouvert d'aluminium moulé, la ou les perforations étant de préférence remplies par l'aluminium. L'insert réalisé en matériau ferromagnétique peut présenter au moins une partie apparente, qu'il convient de protéger par un masquage dans les bains chimiques acides, tels que notamment le ou les bains d'anodisation.

Le récipient de cuisson 1 selon l'invention est obtenu selon un procédé comportant les étapes suivantes :
- réalisation d'une cuve 10 présentant une face extérieure 11 en aluminium et une face intérieure 12,
- réalisation d'une anodisation dure d'au moins la face extérieure 11 de la cuve 10,
dans lequel au moins une étape de coloration est réalisée sur la face extérieure anodisée après l'anodisation dure, ladite étape de coloration mettant en oeuvre au moins un colorant organique anthraquinonique hydrosoluble.

L'étape de coloration utilise de préférence une immersion dans une solution aqueuse de composé(s) organique(s) anthraquinonique(s) hydrosoluble(s).

Les colorants anthraquinoniques présentent une bonne tenue à la température pouvant dépasser 300°C, cette température étant élevée par rapport aux températures limites relevées pour d'autres colorants organiques.

Les colorants anthraquinoniques permettent d'obtenir des colorations de la surface extérieure anodisée d'un récipient de cuisson, qui présentent un caractère durable. La ou l'une des étapes de coloration utilisent un bain de coloration contenant des composés organiques anthraquinoniques qui vont précipiter et être piégés à l'intérieur des pores de la couche anodisée dure. L'ajout d'un revêtement de protection n'apparait plus nécessaire pour conserver la coloration de la surface extérieure anodisée du récipient de cuisson reposant sur une plaque chauffante, voire exposée à une flamme provenant d'un brûleur tel un brûleur à gaz.

Selon une forme de réalisation avantageuse, l'étape de coloration utilise une immersion dans une solution aqueuse de composés organiques anthraquinoniques hydrosolubles.

Des essais menés avec les colorants « Sanodye Violet MRB new », « Sanodye Blue 2LW » et « Sanodye Blue G » de OMYA ont montré de manière surprenante une tenue satisfaisante de la coloration obtenue aux températures d'utilisation des ustensiles de cuisson, avec une stabilité thermique de la couleur jusqu'à 300°C au four, ainsi qu'après des cuissons rissolées de 20 min sur un brûleur à gaz.

Avant coloration, les surfaces à colorer sont soumises à une attaque dans un produit alcalin suivie de rinçages et d'une neutralisation en milieu acide. Si désiré, une préparation mécanique préalable peut être réalisée selon l'aspect de surface recherché, par exemple une préparation mécanique par polissage, brossage, sablage ou grenaillage. Après la neutralisation un brillantage peut être réalisé par immersion dans un bain d'acide phosphorique. L'étape d'anodisation dans une solution d'acide sulfurique est réalisée avec une concentration en acide comprise entre 10 et 500 g/l, à une température comprise entre -10°C à +30°C, avec un courant continu présentant une densité de courant comprise entre 0,1 à 5 A/dm². Des essais ont montré que pour obtenir une anodisation suffisamment dure, la température du bain d'anodisation doit être inférieure ou égale à 17°C, et de préférence inférieure ou égale à 12°C ; pour obtenir une coloration de la surface anodisée dure, la température du bain d'anodisation doit être supérieure ou égale à 0°C, et de préférence supérieure ou égale à 5°C. L'opération d'anodisation est suivie de plusieurs rinçages dont le dernier est réalisé avec de l'eau déminéralisée. Cette gamme de traitement conduit à la formation d'une couche anodisée d'une épaisseur variable suivant le temps de traitement de 5 à 100 µm et d'une dureté allant de 100 à 600 Vickers.

Avantageusement, le bain de coloration est formé par une solution aqueuse comportant entre 0,1 et 10 g/l de colorant anthraquinonique. La solution aqueuse est préparée avec de l'eau déminéralisée. Le pH obtenu est compris entre 4 et 6. La température du bain de coloration est comprise entre 20 et 80°C. Le temps de coloration dépend de la couleur recherchée et est typiquement compris entre 1 et 60 min.

De préférence, l'étape de coloration est suivie d'une étape de rinçage. L'étape de rinçage peut être suivie d'une étape de colmatage. L'étape de colmatage peut par exemple utiliser l'eau bouillante, ou encore de la vapeur saturée, ou encore un bain contenant des sels métalliques de nickel et/ou de lithium et/ou de silicium. Toutefois la présence d'une étape de colmatage ne semble pas modifier de manière notoire la durabilité des colorations obtenues.

Le procédé comporte avantageusement une étape de réalisation d'un revêtement PTFE sur la face intérieure de la cuve. L'étape de réalisation du revêtement PTFE peut notamment être réalisée par enduction. Si désiré, l'étape de réalisation du revêtement PTFE peut utiliser un PTFE chargé, pour améliorer la résistance de la surface de la face intérieure 12 de la cuve 10 revêtue de PTFE. Des particules minérales peuvent notamment être utilisées comme charge de renfort. Pour obtenir la surface de cuisson en PTFE, le revêtement PTFE est chauffé à une température dépassant 400°C (usuellement de l'ordre de 420°C). Ainsi l'étape de réalisation du revêtement PTFE est réalisée avant l'étape de coloration.

Selon un mode de réalisation, l'étape de réalisation d'une anodisation dure de la face extérieure 11 de la cuve 10 intervient après l'étape de réalisation d'un revêtement PTFE sur la face intérieure 12 de la cuve 10.

Si désiré, une étape de réalisation d'une anodisation dure préliminaire de la face extérieure 11 et de la face intérieure 12 de la cuve 10 peut être envisagée avant l'étape de réalisation d'un revêtement PTFE sur la face intérieure 12 de la cuve 10. Ce traitement préalable d'anodisation dure permet d'obtenir une base dure sous le revêtement PTFE. La présence d'une base dure sous le revêtement PTFE permet d'améliorer la résistance mécanique du revêtement PTFE. L'obtention d'un revêtement PTFE après anodisation dure est notamment divulguée dans le document EP 0 902 105. Toutefois un décapage de la face extérieure 11 de la cuve 10 est alors nécessaire pour réanodiser ladite face extérieure 11 avant de procéder à une étape de coloration. L'étape de réalisation d'une anodisation dure de la face extérieure 11 de la cuve 10 intervient alors après une étape de décapage de la face extérieure 11 de la cuve 10 postérieure à l'étape de réalisation d'un revêtement PTFE sur la face intérieure 12 de la cuve 10.

Selon un autre mode de réalisation, l'étape d'anodisation dure peut être réalisée sur la face intérieure 12 et la face extérieure 11 de la cuve 10, pour obtenir une base dure. L'étape d'anodisation dure est alors une étape d'anodisation dure bi-face.

Si désiré, une préparation de surface avant l'anodisation dure peut comporter un dégraissage de type acide ou basique et/ou un décapage de type acide ou basique, et/ou une neutralisation à l'HNO₃. Un dégraissage de quelques minutes dans un bain de NaOH de concentration 50 g/l à une température de l'ordre de 50°C donne des résultats satisfaisants.

Le traitement d'anodisation dure peut notamment être réalisé par trempage dans un bain. Le traitement d'anodisation préliminaire peut aussi être réalisé par trempage dans un bain. L'anodisation dure présente l'avantage d'une bonne résistance aux rayures et aux chocs. Une gamme de matériaux plus étendue peut ainsi être envisagée pour la réalisation de la cuve 10, par rapport à un émaillage, tout en conservant les propriétés de nettoyage conférées par le revêtement PTFE de la face intérieure 12 de la cuve 10.

L'anodisation dure peut par exemple être obtenue avec un bain de H₂SO₄ de concentration 130 g/l pendant 90 min à une température de l'ordre de 10°C avec une densité de courant de l'ordre de 1,8 A/dm². Des températures plus basses autour de 0°C avec une densité de courant supérieure permettent de réduire le temps de traitement.

Une couche anodisée présentant une épaisseur comprise entre 10 µm et 100 µm donne des résultats satisfaisants pour les possibilités de coloration. De préférence, pour obtenir une couche anodisée dure présentant une tenue mécanique suffisante, la couche anodisée présente une épaisseur au moins égale à 25 µm. La dureté de la couche anodisée dure ainsi obtenue est supérieure à 350 Hv.

Selon une caractéristique préférée, la face extérieure 11 anodisée comporte des pores de taille inférieure à 30 nm et de préférence inférieure à 20 nm.

Le procédé selon l'invention peut notamment comporter les exemples de réalisation suivants :
Exemple 1 : enduction PTFE de la face intérieure 12, anodisation dure de la face extérieure 11, coloration de la face extérieure 11 anodisée dure.
Exemple 2 : anodisation dure préliminaire bi-face de la cuve 10 pour obtenir une base dure, enduction PTFE de la face intérieure 12, anodisation dure de la face extérieure 11, coloration de la face extérieure 11 anodisée dure.
Exemple 3 : anodisation dure bi-face de la cuve 10 pour obtenir une base dure, coloration de la face extérieure 11 et de la face intérieure 12 anodisées dures.

La figure 2 illustre un article culinaire 100 comportant un récipient de cuisson 1 et un organe de préhension 2 fixé sur ledit récipient de cuisson 1 par au moins un rivet 3. A cet effet le rivet 3 est monté dans un trou ménagé dans la cuve 10 du récipient de cuisson 1. Si désiré plusieurs rivets 3 peuvent être utilisés pour fixer l'organe de préhension 2 sur le récipient de cuisson 1. De préférence entre deux et quatre rivets 3 sont utilisés pour fixer l'organe de préhension 2 sur le récipient de cuisson 1. En alternative l'organe de préhension 2 pourrait être fixé sur ledit récipient de cuisson 1 par soudage. Si désiré un autre organe de préhension 4 peut être fixé sur ledit récipient de cuisson 1 par au moins un autre rivet 5 ou par soudage.

La figure 3 illustre un appareil électrique de cuisson 200, comportant un récipient de cuisson 1 associé à des moyens de chauffe 250. Le récipient de cuisson 1 forme une cuve agencée dans une base chauffante 210 comportant les moyens de chauffe 250. La face extérieure 11 de la cuve 10 repose sur les moyens de chauffe 250. Si désiré la face extérieure 11 peut être solidaire des moyens de chauffe 250.

A titre de variante, la face intérieure 12 de la cuve 10 n'est pas nécessairement revêtue de PTFE, d'autres types de revêtements peuvent être envisagés si désiré.

A titre de variante, la face intérieure 12 de la cuve 10 n'est pas nécessairement revêtue. Si désiré la face intérieure 12 de la cuve 10 peut notamment être polie.

La présente invention n'est nullement limitée aux exemples de réalisation décrits, mais englobe de nombreuses modifications dans le cadre des revendications.

## Revendications

1. Procédé d'obtention d'un récipient de cuisson (1), comportant les étapes suivantes :
- réalisation d'une cuve (10) présentant une face extérieure (11) en aluminium et une face intérieure (12),
- réalisation d'une anodisation d'au moins la face extérieure (11) de la cuve (10),
- au moins une étape de coloration étant réalisée sur la face extérieure (11) anodisée après l'anodisation,
**caractérisé en ce que** l'anodisation est une anodisation dure pour obtenir une couche anodisée dure, et **en ce que** ladite étape de coloration met en oeuvre au moins un colorant organique anthraquinonique hydrosoluble, ladite étape de coloration utilisant un bain de coloration contenant des composés organiques anthraquinoniques qui vont précipiter et être piégés à l'intérieur des pores de la couche anodisée dure, pour obtenir des colorations de la surface extérieure anodisée.

2. Procédé d'obtention d'un récipient de cuisson (1) selon la revendication 1, **caractérisé en ce que** l'étape de coloration utilise une immersion dans une solution aqueuse de composé(s) organique(s) anthraquinonique(s) hydrosoluble(s).

3. Procédé d'obtention d'un récipient de cuisson (1) selon l'une des revendications 1 ou 2, **caractérisé en ce qu'**il comporte une étape de réalisation d'un revêtement PTFE sur la face intérieure (12) de la cuve (10) et **en ce que** l'étape de réalisation d'une anodisation dure de la face extérieure (11) de la cuve (10) intervient après l'étape de réalisation d'un revêtement PTFE sur la face intérieure (12) de la cuve (10).

4. Procédé d'obtention d'un récipient de cuisson (1) selon la revendication 3, **caractérisé en ce qu'**il comporte une étape de réalisation d'une anodisation dure préliminaire de la face extérieure (11) et de la face intérieure (12) de la cuve (10) avant l'étape de réalisation d'un revêtement PTFE sur la face intérieure (12) de la cuve (10) et **en ce que** l'étape de réalisation d'une anodisation dure de la face extérieure (11) de la cuve (10) intervient après une étape de décapage de la face extérieure (11) de la cuve (10) postérieure à l'étape de réalisation d'un revêtement PTFE sur la face intérieure (12) de la cuve (10).

5. Procédé d'obtention d'un récipient de cuisson (1) selon l'une des revendications 1 ou 2, **caractérisé en ce que** l'étape d'anodisation dure et l'étape de coloration sont réalisées sur la face intérieure (12) et la face extérieure (11) de la cuve (10).

6. Procédé d'obtention d'un récipient de cuisson (1) selon l'une des revendications 1 à 5, **caractérisé en ce que** l'anodisation dure est réalisée à une température supérieure ou égale à 0°C.

7. Procédé d'obtention d'un récipient de cuisson (1) selon la revendication 6, **caractérisé en ce que** l'anodisation dure est réalisée à une température inférieure ou égale à 17°C.

8. Procédé d'obtention d'un récipient de cuisson (1) selon l'une des revendications 1 à 7, **caractérisé en ce que** l'anodisation dure est réalisée à une température comprise entre 5°C et 12°C.

9. Récipient de cuisson (1) comportant une cuve (10) présentant une face extérieure (11) en aluminium ainsi qu'une face intérieure (12), au moins la face extérieure (11) étant anodisée, **caractérisé en ce que** la face extérieure (11) est anodisée dure pour obtenir une couche anodisée dure, et **en ce que** la face extérieure (11) anodisée dure est colorée avec au moins un colorant organique anthraquinonique hydrosoluble, des composés organiques anthraquinoniques étant piégés à l'intérieur des pores de la couche anodisée dure, pour obtenir des colorations de la surface extérieure anodisée.

10. Récipient de cuisson (1) selon la revendication 9, **caractérisé en ce que** l'épaisseur de la couche anodisée dure est au moins égale à 25 µm.

11. Récipient de cuisson (1) selon la revendication 10, **caractérisé en ce que** la cuve (10) est obtenue par emboutissage d'un substrat (13) présentant au moins une face en aluminium.

12. Récipient de cuisson (1) selon la revendication 11, **caractérisé en ce que** le substrat (13) présente deux faces en aluminium.

13. Récipient de cuisson (1) selon l'une des revendications 11 ou 12, **caractérisé en ce que** le substrat (13) est en aluminium massif.

14. Récipient de cuisson (1) selon la revendication 11, **caractérisé en ce que** le substrat (13) est formé par un colaminé présentant une face en aluminium et une face en acier inoxydable.

15. Récipient de cuisson (1) selon l'une des revendications 9 à 13, **caractérisé en ce que** la cuve (10) est réalisée en fonte d'aluminium.

16. Récipient de cuisson (1) selon l'une des revendications 9 à 15, **caractérisé en ce que** la face extérieure (11) de la cuve (10) présente une surface brossée ou microbillée.

17. Récipient de cuisson (1) selon l'une des revendications 9 à 16, **caractérisé en ce que** la cuve (10) comporte au moins un insert réalisé en matériau ferromagnétique.

18. Article culinaire (100) comportant un récipient de cuisson (1) et un organe de préhension (2) fixé sur ledit récipient de cuisson (1) par au moins un rivet (3) ou par soudage, **caractérisé en ce que** ledit récipient de cuisson (1) est conforme à l'une des revendications 9 à 17.

19. Appareil électrique de cuisson (200), comportant un récipient de cuisson (1) associé à des moyens de chauffe (250), **caractérisé en ce que** ledit récipient de cuisson (1) est conforme à l'une des revendications 9 à 17.

## Patentansprüche

1. Verfahren zur Herstellung eines Kochbehälters (1), das die folgenden Schritte umfasst:
- Herstellen eines Behälters (10), der eine Außenseite (11) aus Aluminium und eine Innenseite (12) aufweist,
- Eloxieren zumindest der Außenseite (11) des Behälters (10),
- zumindest einen Schritt des Färbens, der auf der eloxierten Außenseite (11) nach dem Eloxieren durchgeführt wird,
**dadurch gekennzeichnet, dass** das Eloxieren ein Harteloxieren mit dem Ziel einer harteloxierten Schicht ist und dass der genannte Schritt des Färbens zumindest einen wasserlöslichen organischen Anthrachinon-Farbstoff einsetzt, wobei der genannte Schritt des Färbens ein Färbebad verwendet, das organische Anthrachinon-Verbindungen enthält, die ausgefällt werden und sich in den Poren der harteloxierten Schicht absetzen, mit dem Ziel von Färbungen der eloxierten Außenseite.

2. Verfahren zur Herstellung eines Kochbehälters (1) nach Anspruch 1, **dadurch gekennzeichnet, dass** der Schritt des Färbens ein Eintauchen in eine wässrige Lösung von einer oder mehreren wasserlöslichen organischen Anthrachinon-Verbindungen verwendet.

3. Verfahren zur Herstellung eines Kochbehälters (1) nach einem der Ansprüche 1 oder 2, **dadurch gekennzeichnet, dass** es einen Schritt des Aufbringens einer PTFE-Beschichtung auf die Innenseite (12) des Behälters (10) umfasst und dass der Schritt des Harteloxierens der Außenseite (11) des Behälters (10) nach dem Schritt des Aufbringens einer PTFE-Beschichtung auf die Innenseite (12) des Behälters (10) erfolgt.

4. Verfahren zur Herstellung eines Kochbehälters (1) nach Anspruch 3, **dadurch gekennzeichnet, dass** es einen Schritt des vorbereitenden Harteloxierens der Außenseite (11) und der Innenseite (12) des Behälters (10) vor dem Schritt des Aufbringens einer PTFE-Beschichtung auf die Innenseite (12) des Behälters (10) umfasst und dass der Schritt des Harteloxierens der Außenseite (11) des Behälters (10) nach einem Schritt des Beizens der Außenseite (11) des Behälters (10) nach dem Schritt des Aufbringens einer PTFE-Beschichtung auf die Innenseite (12) des Behälters (10) erfolgt.

5. Verfahren zur Herstellung eines Kochbehälters (1) nach einem der Ansprüche 1 oder 2, **dadurch gekennzeichnet, dass** der Schritt des Harteloxierens und der Schritt des Färbens auf der Innenseite (12) und der Außenseite (11) des Behälters (10) durchgeführt werden.

6. Verfahren zur Herstellung eines Kochbehälters (1) nach einem der Ansprüche 1 bis 5, **dadurch gekennzeichnet, dass** das Harteloxieren bei einer Temperatur von mindestens 0 °C durchgeführt wird.

7. Verfahren zur Herstellung eines Kochbehälters (1) nach Anspruch 6, **dadurch gekennzeichnet, dass** das Harteloxieren bei einer Temperatur von höchstens 17 °C durchgeführt wird.

8. Verfahren zur Herstellung eines Kochbehälters (1) nach einem der Ansprüche 1 bis 7, **dadurch gekennzeichnet, dass** das Harteloxieren bei einer Temperatur zwischen 5 °C und 12 °C durchgeführt wird.

9. Kochbehälter (1) mit einem Behälter (10), der eine Außenseite (11) aus Aluminium sowie eine Innenseite (12) aufweist, wobei zumindest die Außenseite (11) eloxiert ist, **dadurch gekennzeichnet, dass** die Außenseite (11) harteloxiert ist, um eine harteloxierte Schicht zu erzielen, und dass die harteloxierte Außenseite (11) mit zumindest einem wasserlöslichen organischen Anthrachinon-Farbstoff gefärbt ist, wobei sich organische Anthrachinon-Verbindungen in den Poren der harteloxierten Schicht absetzen, um Färbungen der eloxierten Außenfläche zu erzielen.

10. Kochbehälter (1) nach Anspruch 9, **dadurch gekennzeichnet, dass** die Dicke der harteloxierten Schicht mindestens 25 µm beträgt.

11. Kochbehälter (1) nach Anspruch 10, **dadurch gekennzeichnet, dass** der Behälter (10) durch Tiefziehen eines Substrats (13) erhalten wird, das zumindest eine Seite aus Aluminium aufweist.

12. Kochbehälter (1) nach Anspruch 11, **dadurch gekennzeichnet, dass** das Substrat (13) zwei Seiten aus Aluminium aufweist.

13. Kochbehälter (1) nach einem der Ansprüche 11 oder 12, **dadurch gekennzeichnet, dass** das Substrat (13) aus massivem Aluminium besteht.

14. Kochbehälter (1) nach Anspruch 11, **dadurch gekennzeichnet, dass** das Substrat (13) aus einem Verbundwerkstoff besteht, der eine Seite aus Aluminium und eine Seite aus Edelstahl aufweist.

15. Kochbehälter (1) nach einem der Ansprüche 9 bis 13, **dadurch gekennzeichnet, dass** der Behälter (10) aus Aluminiumguss hergestellt wird.

16. Kochbehälter (1) nach einem der Ansprüche 9 bis 15, **dadurch gekennzeichnet, dass** die Außenseite (11) des Behälters (10) eine gebürstete oder kugelgestrahlte Oberfläche aufweist.

17. Kochbehälter (1) nach einem der Ansprüche 9 bis 16, **dadurch gekennzeichnet, dass** der Behälter (10) zumindest einen Einsatz aus einem ferromagnetischen Werkstoff aufweist.

18. Kochgeschirr (100) mit einem Kochbehälter (1) und einem Griffelement (2), das an dem genannten Kochbehälter (1) durch mindestens einen Niet (3) oder durch Schweißen befestigt ist, **dadurch gekennzeichnet, dass** der genannte Kochbehälter (1) einem der Ansprüche 9 bis 17 entspricht.

19. Elektrisches Kochgerät (200) mit einem Kochbehälter (1) und Heizmitteln (250), **dadurch gekennzeichnet, dass** der genannte Kochbehälter (1) einem der Ansprüche 9 bis 17 entspricht.

## Claims

1. Process of obtaining a cooking vessel (1), comprising the following steps:
- Production of a container (10) with an exterior surface (11) made of aluminium and an interior surface (12),
- Performance of anodisation on at least the exterior surface (11) of the container (10),
- at least one colouring step is performed on the anodised exterior surface (11) after the anodisation is performed,
**characterised in that** the anodisation is a hard anodisation to obtain a hard anodised layer, and **in that** said colouring step uses at least one water-soluble anthraquinone organic dye, said colouring step using a colouring bath containing anthraquinone organic compounds which will precipitate and be trapped inside the pores of the hard anodised layer, to obtain colouring on the exterior anodised surface.

2. Process of obtaining a cooking vessel (1) according to claim 1, **characterised in that** the colouring step uses immersion in an aqueous solution of water-soluble anthraquinone organic compound(s).

3. Process of obtaining a cooking vessel (1) according to one of claims 1 or 2, **characterised in that** it includes a step in which a PTFE coating is applied to the interior surface (12) of the container (10) and **in that** the step in which hard anodisation is performed on the exterior surface (11) of the container (10) occurs after the step in which a PTFE coating is applied to the interior surface (12) of the container (10).

4. Process of obtaining a cooking vessel (1) according to claim 3, **characterised in that** it includes a step in which preliminary hard anodisation is performed on the exterior surface (11) and on the interior surface (12) of the container (10) prior to the step in which a PTFE coating is applied to the interior surface (12) of the container (10) and **in that** the step in which hard anodisation is performed on the exterior surface (11) of the container (10) occurs after an etching step on the exterior surface (11) of the container (10), following the PTFE coating step on the interior surface (12) of the container (10).

5. Process of obtaining a cooking vessel (1) according to one of claims 1 or 2, **characterised in that** the hard anodisation step and the colouring step are performed on the interior surface (12) and the exterior surface (11) of the container (10).

6. Process of obtaining a cooking vessel (1) according to any one of claims 1 to 5, **characterised in that** the hard anodisation is performed at a temperature of greater than or equal to 0 °C.

7. Process of obtaining a cooking vessel (1) according to claim 6, **characterised in that** the hard anodisation is performed at a temperature of less than or equal to 17 °C.

8. Process of obtaining a cooking vessel (1) according to one of claims 1 to 7, **characterised in that** the hard anodisation is performed at a temperature between 5°C and 12°C.

9. Cooking vessel (1) comprising a container (10) with an exterior surface (11) made of aluminium and interior surface (12), where at least the interior surface (11) is anodised, **characterised in that** the exterior surface (11) is hard anodised to obtain a hard anodised layer, and **in that** the hard anodised exterior surface (11) is coloured with at least one water-soluble anthraquinone organic dye, using anthraquinone organic compounds trapped inside the pores of the hard anodised layer, to obtain colouring on the anodised external surface.

10. Cooking vessel (1) according to claim 9, **characterised in that** the thickness of the anodised layer is at least equal to 25 µm.

11. Cooking vessel (1) according to claim 10, **characterised in that** the container (10) is obtained by stamping a substrate (13) with at least one aluminium surface.

12. Cooking vessel (1) according to claim 11, **characterised in that** the substrate (13) has two aluminium surfaces.

13. Cooking vessel (1) according to one of claims 11 or 12, **characterised in that** the substrate (13) is made of solid aluminium.

14. Cooking vessel (1) according to claim 11, **characterised in that** the substrate (13) is formed by a laminate with one aluminium surface and one stainless steel surface.

15. Cooking vessel (1) according to any one of claims 9 to 13, **characterised in that** the container (10) is made of cast aluminium.

16. Cooking vessel (1) according to any one of claims 9 to 15, **characterised in that** the exterior surface (11) of the container (10) has a brushed or microbead-blasted surface.

17. Cooking vessel (1) according to one of claims 9 to 16, **characterised in that** the container (10) has at least one insert made of ferromagnetic material.

18. Culinary item (100) consisting of a cooking vessel (1) and a handling instrument (2) attached to said cooking vessel (1) by at least one rivet (3) or by welding, **characterised in that** said cooking vessel (1) conforms to any one of claims 9 to 17.

19. Electrical cooking apparatus (200), consisting of a cooking vessel (1) combined with heating means (250), **characterised in that** said cooking vessel (1) conforms to any one of claims 9 to 17.
